Europäisches Patentamt

European Patent Office

Office européen des brevets

(11) Veröffentlichungsnummer: **0 505 830 A2**

# EUROPÄISCHE PATENTANMELDUNG

(21) Anmeldenummer: **92104127.3**

(22) Anmeldetag: **11.03.92**

(51) Int. Cl.⁵: **F25C 5/00**, F16P 3/14

(30) Priorität: **23.03.91 DE 4109618**

(43) Veröffentlichungstag der Anmeldung:
**30.09.92 Patentblatt 92/40**

(84) Benannte Vertragsstaaten:
**DE FR IT**

(71) Anmelder: **Gaggenau-Werke Haus- und Lufttechnik GmbH Eisenwerkstrasse 11**
W-7560 Gaggenau(DE)

(72) Erfinder: **Der Erfinder hat auf seine Nennung verzichtet**

(74) Vertreter: **Moser, Herbert, Dr.-Ing. Nowackanlage 15**
W-7500 Karlsruhe 1(DE)

(54) Eisbereitungsvorrichtung mit einer Ausgabe- und Zerkleinerungsvorrichtung für Kleineisstücke.

(57) Eine Eisbereitungsvorrichtung mit einer Ausgabe- und Zerkleinerungsvorrichtung für Kleineisstücke als selbständige Einheit, oder insbesondere integriert in einen Kühl- oder oder Gefrierschrank, mit einem die Kleineisstücke aufnehmenden Vorratsbehälter (24), in den ein Förderelement (23) eingreift, welches die Kleineisstücke in die im Bereich der Ausgabeausnehmung (20a) angeordnete, wahlweise betätigbare, durch ein Antriebselement antreibbare Ausgabe- und Zerkleinerungsvorrichtung (21) fördert, soll hinsichtlich der Vermeidung einer Verletzungsgefahr bei unbefugtem Fingereingriff in die Ausgabeausnehmung verbessert werden. Dies erfolgt gemäß der Erfindung dadurch, daß im Bereich der Ausgabeausnehmung (20a) eine Sicherungseinrichtung angeordnet ist, welche bei Fingereingriff in die Ausgabeausnehmung (20a) den Bewegungsvorgang von im Fingereingriff erreichbaren, bewegbaren Teilen der Ausgabe- und Zerkleinerungsvorrichtung (21) durch Abschalten des Antriebselementes (15) stoppt.

Fig. 2

Die Erfindung betrifft eine Eisbereitungsvorrichtung als selbständige Einheit oder insbesondere integriert in einen Kühl- oder Gefrierschrank, mit einer Ausgabe- und Zerkleinerungsvorrichtung für Kleineisstücke, mit einem die Kleineisstücke aufnehmenden Vorratsbehälter, in den ein Förderelement eingreift, welches die Kleineisstücke in die im Bereich der Ausgabeausnehmung angeordnete, wahlweise betätigbare, durch ein Antriebselement antreibbare Ausgabe- und Zerkleinerungsvorrichtung fördert.

Eine Ausgabevorrichtung der eingangs genannten Art ist in der DE-GM 90 04 882.2 beschrieben. Eine andere Ausführungsform einer solchen Ausgabevorrichtung bildet den Gegenstand der US-Patentschrift 3 902 331 und der britischen Patentschrift 1 337 647.

Bei diesen Vorrichtungen, die entweder als Eisbereitungseinheit eine selbständige Baueinheit bilden, oder als Bauteil eines Kühl- oder Gefrierschrankes ausgebildet sein können, ist als Förderelement eine Förderschnecke für die Kleineisstücke vorhanden, die an ihrer Ausgabeseite bewegbare Teile der Ausgabe- und Zerkleinerungsvorrichtung antreibt. In dieser Zerkleinerungsvorrichtung greifen drehbewegbare, gezahnte Stegteile zwischen feststehende Stegteile ein, und diese bewegbaren Teile sind durch den Schacht der Ausgabeausnehmung von außen zugänglich. Beim Fingereingriff besteht daher die Gefahr ernsthafter Verletzungen.

Die Erfindung geht von der Aufgabenstellung aus, eine Vorrichtung der eingangs angegebenen Art so auszubilden, daß die Verletzungsgefahr bei möglichem Hand- bzw. Fingereingriff in die Ausgabeausnehmung ausgeschlossen wird.

Die Lösung dieser Aufgabenstellung besteht darin, daß im Bereich der Ausgabeausnehmung eine Sicherungseinrichtung angeordnet ist, welche beim Eingriff in die Ausgabeausnehmung den Bewegungsvorgang von im Fingereingriff erreichbaren bewegbaren Teilen der Ausgabe- und Zerkleinerungsvorrichtung durch Abschalten des Antriebselementes stoppt.

Eine solche Sicherungseinrichtung kann in verschiedener Weise, beispielsweise mit einer Ultraschallschranke, mit einer Normallichtschranke, bevorzugt jedoch mit einer Infrarotlichtschranke aufgebaut werden.

Es hat sich nämlich überraschenderweise gezeigt, daß die meist als Klareisstücke hergestellten Kleineisstücke das Infrarotlicht nur relativ schwach reflektieren und daher als für Infrarotlicht durchsichtig angesehen werden können. Dadurch läßt sich die Ansprechverzögerung der Lichtschranke im wesentlichen durch die stärker reflektierenden zerkleinerten Eisstücke festlegen und ein unerwünschtes häufiges Abschalten der Förderbewegung wird vermieden.

Bei einer vorteilhaften Ausbildungsform kann daher vorgesehen sein, daß als Sicherungseinrichtung im Bereich der Ausgabeausnehmung mindestens eine Lichtschranke angeordnet ist, welche eine Ansprechverzögerung derart aufweist, daß Kleineisstücke und zerkleinerte Eisstücke ohne Stillegung der angetriebenen Teile ausgeworfen werden. Die Lichtschranke weist zweckmäßig eine Ansprechverzögerung unterhalb von 200 msec auf.

In einer bevorzugten Ausführungsform ist das Förderelement eine schrägliegende Förderschnecke, deren Ganghöhe der Größe der zu transportierenden Kleineisstücke angepaßt ist. Der Antrieb der Ausgabe- und Zerkleinerungsvorrichtung ist dabei mit dem Antrieb der Förderschnecke direkt gekoppelt.

Die Lichtschranke kann vorteilhaft als Infrarotunterbrechungslichtschranke oder als Infrarotreflexlichtschranke ausgebildet sein. In beiden Fällen erscheint ein Impulsbetrieb zweckmäßig.

Bei der Infrarotreflexlichtschranke kann es zur Vermeidung einer Netzfrequenzeinstreuung ferner vorteilhaft sein, die Schaltung der Lichtschranke mit einem Hochpaßfilter, mit einer Durchlaßfrequenz oberhalb der Netzfrequenz, zu versehen. Dem Infrarotempfänger wird zweckmäßig ein Umlichtfilter vorgeschaltet. Eine praktisch erprobte Ausführungsform einer Infrarot-Reflexlichtschranke kann zweckmäßig in der Weise aufgebaut werden, daß die Impulsfolgefrequenz des Infrarotsenders unterhalb von 2,5 kHz bei einem Tastverhältnis oberhalb 1:4 liegt. Für die Infrarotunterbrechungslichtschranke ist eine höhere Impulsfolgefrequenz unterhalb von 30 kHz bei einem Tastverhältnis von 1:1 zweckmäßig.

Zur gleichmäßigen Ausleuchtung der Ausgabeausnehmung und aus Sicherheitsgründen bei Ausfall einer Lichtschranke erscheint es zweckmäßig, mehrere Infrarot-Lichtschranken in Zeilenanordnung anzubringen.

Vorteilhaft sind bei der Infrarotunterbrechungslichtschranke die Sendedioden nacheinanderfolgend ansteuerbar, und die Empfangsdioden parallelgeschaltet. Bei der Infrarotreflexlichtschranke erscheint eine Reihenschaltung der Sendedioden und eine Parallelschaltung der Empfangsdioden zweckmäßig.

Die apparative Ausbildung kann vorteilhaft in der Weise erfolgen, daß die Auswurföffnung durch einen Schachtteil gebildet ist, in dessen Wandteilen mindestens eine Infrarotlichtschranke zweckmäßig drei oder vier Lichtschranken angeordnet sind.

Eine zusätzliche Verbesserung der Absicherung gegen unerwünschten Eingriff und zur Vermeidung streuender Abwurfbewegungen der ausgegebenen Kleineisstücke oder des zerkleinerten Eises kann dadurch erreicht werden, daß in dem Schachtteil eine durch die fallenden Eisstücke bzw. das zerkleinerte Eis auslenkbare Schwenkklappe angeordnet ist, welche die Eingriffsöffnung zu den bewegbaren Teilen der Ausgabe- und Zerkleinerungsvorrichtung wenigstens teilweise abdeckt. Eine solche Schwenkklappe kann zusätzlich in erwünschter Weise den Bewegungsvorgang der ausgegebenen Eisstücke so beeinflussen, daß keine seitlich abspritzenden Eisstücke auftreten, sondern daß die Eisstücke, wie vorgesehen, in einen unterhalb des Schachtteils aufgestellten Behälter, beispielsweise in ein Glas, fallen.

Die Schwenkklappe kann in ihrer Ausgangsschräglage zweckmäßig durch ein auf ihrer Drehwelle angeordnetes Schwerkraft-Orientierungsgewicht lageorientiert auslenkbar gehaltert sein.

Da im Abwurfbereich der zerkleinerten Eisstücke ein Festhaften dieser Eisstücke auf der Oberfläche der Schwenkklappe eintreten kann, ist diese Schwenkklappe vorteilhaft im Abwurfbereich der zerkleinerten Eisstücke so ausgespart, daß diese, ohne auf die Schwenkklappe im Randbereich aufzutreffen, frei herabfallen. Eine solche Aussparung wird vorteilhaft durch ein Abschrägen der Schwenkklappe im Eckbereich erreicht.

Durch die Merkmale der Erfindung wird eine Eisbereitungsvorrichtung mit Ausgabe- und Zerkleinerungsvorrichtung für Kleineisstücke, insbesondere für Klareisstücke, geschaffen, bei der ein unerwünschter Fingereingriff, beispielsweise zum Loslösen von festgeklemmten Eisstücken, durch Stillsetzen des Antriebs gefahrlos bleibt.

Die Erfindung soll nachfolgend anhand von Ausführungsbeispielen näher erläutert werden; es zeigen:

Fig. 1    ein Blockschaltbild der Sicherungseinrichtung mit Reflexlichtschranke;

Fig. 2    eine geschnittene Seitenansicht der Ausgabe- und Zerkleinerungsvorrichtung für Kleineisstücke;

Fig. 3    einen Schnitt längs der Linie 2-2 in Fig. 2 bei der Ausführungsform Reflexlichtschranke;

Fig. 4    ein Blockschaltbild der Sicherungseinrichtung mit Unterbrechungslichtschranke;

Fig. 5    einen Schnitt längs der Linie 2-2 in Fig. 2 in der Ausführungsform Unterbrechungslichtschranke.

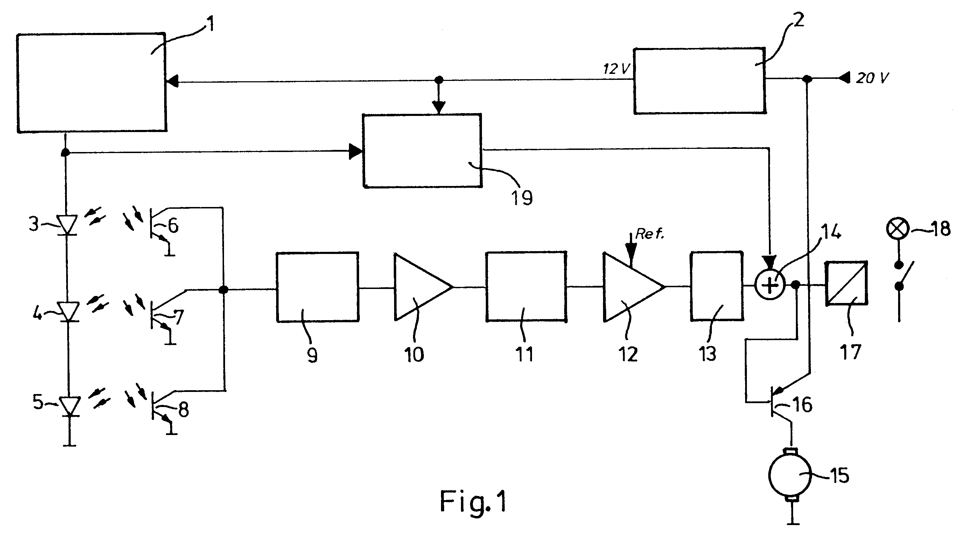

In Fig. 1 erkennt man einen Impulsoszillator 1, welcher eine Sendefrequenz unterhalb von 2 kHz bei einem Tastverhältnis von 1:4 erzeugt. Zur Spannungsversorgung ist ein Spannungskonstanthalter 2 vorgesehen, der mit Niederspannung von 20 V gespeist wird. Der Impulsoszillator 1 liefert Spannungsimpulse zum Zünden der Infrarotsendedioden 3,4,5 die in Reihe geschaltet sind. Mit den Infrarotsendedioden sind Reflexempfangsdioden 6,7,8 zu einer Baueinheit vereinigt.

Während die Sendedioden 3,4,5 in Reihenschaltung betrieben werden, ist für die Empfangsdioden 6,7,8 ein Parallelbetrieb zweckmäßig. Das gemeinsame Ausgangssignal der Empfangsdioden gelangt über ein Hochpaßfilter 9 und einen Verstärker 10 zu einem Gleichrichter 11 und wird dort in ein Gleichspannungssignal umgeformt.

Dieses Gleichspannungssignal und ein festgelegtes Gleichspannungs-Referenzsignal werden einem Komparator 12 zugeführt und von diesem verglichen. Überschreitet das Eingangssignal des Komparators 12 die Höhe des Referenzsignals, so wird nach einer Zeitverzögerung über ein Verzögerungsglied 13 Spannung zum Verzweigungspunkt 14 durchgeschaltet und damit die Abschaltung des Antriebsmotors 15 der Förderschnecke über einen Transistor 16 herbeigeführt. Gleichzeitig erfolgt über ein Schaltrelais 17 das Einschalten einer Signallampe 18, welche die aufgetretene Störung anzeigt.

Zusätzlich ist eine Sicherheitsschaltung 19 vorhanden, deren Eingangsspannung bei einer Unterbrechung in der Reihenschaltung der Sendedioden 3,4,5 ansteigt. Zusätzlich wird auch das Vorhandensein der Betriebsspannung für den Impulsoszillator 1 in dieser Sicherheitsschaltung 19 überwacht. Ein Ausbleiben der Spannungsversorgung oder eine Unterbrechung in der Reihenschaltung der Sendedioden 3,4,5 führt zur Auslösung der Sicherheitsschaltung 19, die dann ebenfalls eine Ausgangsspannung zum Verzweigungspunkt 14 abgibt, welche die Abschaltung des Antriebsmotors 15 und die Fehlermeldung des Schaltrelais 17 auslöst.

Der Aufbau der einzelnen Schaltelemente erfolgt zweckmäßig unter Verwendung integrierter Schaltkreise auf einer Leiterplatte, die an der Außenseite des aus Kunststoff bestehenden Schachtteils angeordnet werden kann.

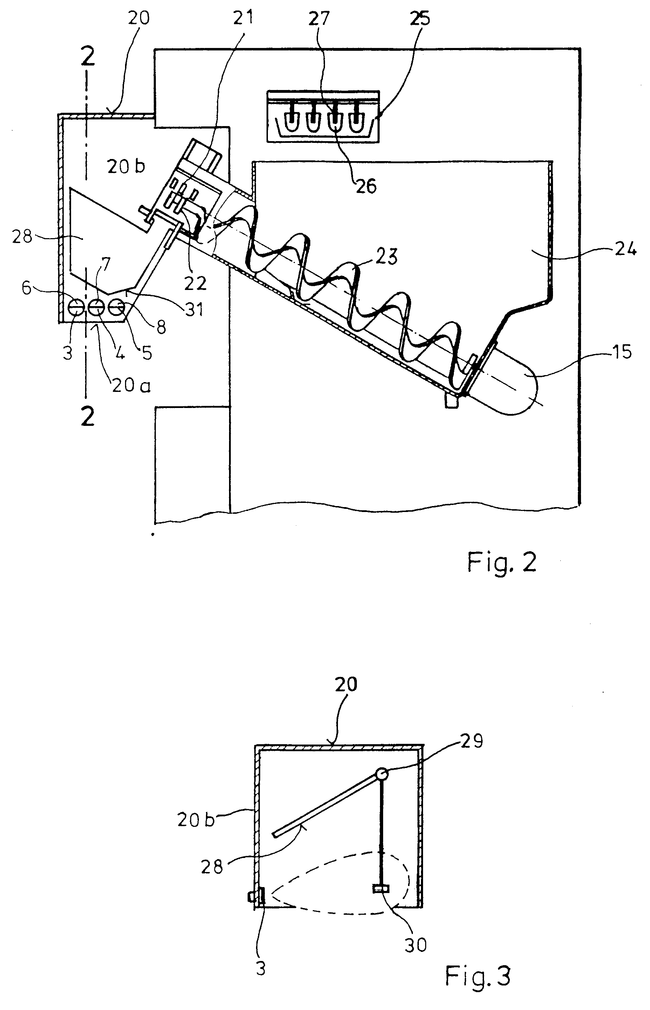

In Fig. 2 ist die Bauausführung einer solchen Sicherungseinrichtung bei einer in einen Kühlschrank integrierten Eisbereitungsvorrichtung erkennbar. In der einen Seitenwandfläche 20b eines Schachtteils 20 sind drei Infrarotsendedioden 3,4,5 zusammen mit den Empfangsdioden 6,7,8 in einer Zeile angeordnet. Die bewegbaren Teile der Ausgabe- und Zerkleinerungsvorrichtung 21 sind bei 22 erkennbar. Die Ausgabe der Kleineisstücke erfolgt an einer Ausgabeausnehmung 20a des Schachtteils 20. Der Antrieb der Ausgabe- und Zerkleinerungsvorrichtung 21 geht über eine Kupplung unmittelbar von der Förderschnecke 23 aus, die in Schräglage in einen Vorratsbehälter 24 eingreift. Zum Antrieb der Förderschnecke und damit zum Antrieb der Ausgabe- und Zerkleinerungsvorrichtung ist der elektrische Antriebsmotor 15 vorgesehen. Eine Gefriereinrichtung 25 befindet sich oberhalb des Vorratsbehälters 24 und die dort hergestellten Kleineisstücke 26 werden beispielsweise durch Erwärmung der Kühlfinger 27 in den Vorratsbehälter 24 abgeworfen.

Die Schnittansicht nach Fig. 3 verdeutlicht die keulenförmige Ausbreitung der Infrarotstrahlung, wie sie von einer der drei Infrarotsendedioden 3,4,5 der Infrarotreflexlichtschranke ausgeht.

Es ist ferner eine durch die fallenden Eisstücke und Teilstückchen auslenkbare Schwenkklappe 28 erkennbar, die auf einer Schwenkwelle 29 schwenkbar gelagert ist. Zur Orientierung der Schwenkklappe 28 in der gezeigten Schräglage ist auf der Schwenkwelle 29 ein Schwerkraft-Orientierungsgewicht 30 vorgesehen. Die Schwenkklappe 28 ist im Abwurfbereich der zerkleinerten Eisstücke durch eine Abschrägung 31 ausgespart (siehe Fig.2).

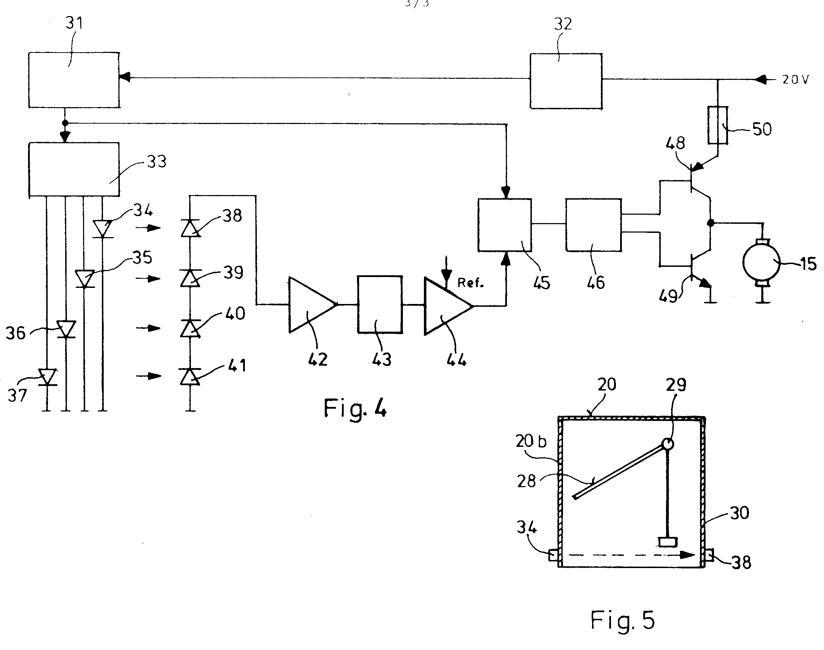

Fig. 4 zeigt das Blockschaltbild für die Infrarotunterbrechungslichtschranke. Man erkennt einen Impulsoszillator 31, welcher eine Sendefrequenz von ca. 22 kHz bei einem Tastverhältnis von 1:1 erzeugt. Zur Spannungsversorgung ist ein Spannungskonstanthalter 32 vorgesehen, der mit Niederspannung von 20 V gespeist wird. Den Infrarotsendedioden 34,35,36,37 liegen Empfangsdioden 38,39,40,41 gegenüber. Der Impulsoszillator 31 liefert Spannungsimpulse zur Ansteuerung der Infrarotsendedioden 34,35,36,37.

Während die Infrarotsendedioden 34,35,36,37 über einen Multiplexer 33 einzeln nacheinander mit dem Impulsoszillator 31 verbunden werden, ist für die Empfangsdioden 38,39, 40,41 eine Reihenschaltung vorgesehen. Sende- und Empfangsdioden sind jeweils an den sich gegenüberliegenden Seiten des Schachtteils in einer Reihe angeordnet. Das gemeinsame Ausgangssignal der Empfangsdioden gelangt über einen Verstärker 42 und ein Entkoppelglied 43 zu einem Komparator 44.

Dem Komparator 44 wird außerdem ein Gleichspannungs-Referenzsignal zugeführt, mit welchem das Empfangssignal der Empfangsdioden verglichen wird. Überschreitet das Eingangssignal des Komparators die Höhe des Referenzsignals, so schaltet dieser das Empfangssignal zu einer integrierten Einheit 45 weiter. Die integrierte Einheit 45 vergleicht die Frequenz und Phasenlage des Empfangssignals mit der des Impulsoszillators 31 und regelt diesen gegebenenfalls nach. Bei Nichtübereinstimmung beider Signale wird nach einer vorbestimmten Reaktionszeit ein Zeitglied 46 angesteuert, das für mindestens einen Durchlauf (Zeit, die benötigt wird bis alle Sendedioden angesteuert wurden) den Antriebsmotor 15 der Förderschnecke und damit die Ausgabe- und Zerkleinerungsvorrichtung über die Transistoren 48 und 49 abschaltet.

Die Transistoren 48 und 49 überwachen sich gegenseitig, so daß bei Kurzschluß von einem der beiden Transistoren ein Sicherungselement 50 zum Ansprechen gebracht wird, welches den Antriebsmotor 15 stillsetzt.

Der Aufbau der einzelnen Schaltelemente erfolgt auch in dieser Schaltung zweckmäßig unter weitgehender Verwendung integrierter Schaltkreise auf einer Leiterplatte, die an der Außenseite des aus Kunststoff bestehenden Schachtteils angeordnet ist.

Die Schnittansicht nach Fig. 5 zeigt die Anordnung einer Infrarot-und Empfangsdiode 34,38,bei der Ausführung als Infrarotunterbrechungslichtschranke,an den Außenseiten der gegenüberliegenden Schachtwände. Die dahinterliegenden weiteren Sende- und Empfangsdioden 35,36,37; 39,40,41 bilden drei zusätzliche, die Eingriffsausnehmung überwachende Lichtschranken. Die Anordnung der Lichtschranken kann gegebenenfalls vorteilhaft auch derart erfolgen, daß sich die Lichtstrecken überkreuzen oder zueinander schräg liegen.

Bei der Infrarotunterbrechungslichtschranke können die Sende- und Empfangsdioden vorteilhaft außerhalb des Schachtteils 20, vorzugsweise auf dessen äußeren Seitenwandflächen, angeordnet sein. In diesem Falle muß als Werkstoff für den Schachtteil 20 ein infrarotdurchlässiges Material, insbesondere ein infrarotdurchlässiger thermoplastischer Kunststoff, gewählt werden. Diese äußere Anbringung ermöglicht eine gegen fallende Eisstücke und Eissplitter besonders geschützte Anordnung der Sende- und Empfangsdioden.

**Patentansprüche**

1.    Eisbereitungsvorrichtung mit einer Ausgabe- und Zerkleinerungsvorrichtung (21) für Kleineisstücke als selbständige Einheit oder insbesondere integriert in einen Kühl- oder Gefrierschrank, mit einem die Kleineisstücke aufnehmenden Vorratsbehälter (24), in den ein Förderelement (23) eingreift, welches die Kleineisstücke in die im Bereich der Ausgabeausnehmung (20a) angeordnete, wahlweise betätigbare, durch ein Antriebselement (15) antreibbare Ausgabe- und Zerkleinerungsvorrichtung (21) fördert, **dadurch gekennzeichnet,** daß im Bereich der Ausgabeausnehmung (20a) eine Sicherungseinrichtung angeordnet ist, welche beim Eingriff in die Ausgabeausnehmung (20a) den Bewegungsvorgang von im Fingereingriff erreichbaren bewegbaren Teilen der Ausgabe- und Zerkleinerungsvorrichtung (21) durch Abschalten des Antriebselementes (15) stoppt.

2.    Vorrichtung für Kleineisstücke nach Anspruch 1, **dadurch gekennzeichnet,** daß das Förderelement eine schrägliegende Förderschnecke (23) ist, deren Ganghöhe der Größe der zu transportierenden Kleineisstücke angepaßt ist.

3. Vorrichtung nach Anspruch 2, **dadurch gekennzeichnet,** daß der Antrieb der Ausgabe- und Zerkleinerungsvorrichtung (21) mit dem Antrieb der Förderschnecke (23) gekoppelt ist.

4. Vorrichtung nach Anspruch 1, **dadurch gekennzeichnet,** daß als Sicherungseinrichtung im Bereich der Ausgabeausnehmung mindestens eine Lichtschranke (3,4,5;6,7,8 bzw. 34,35,36,37 38,39, 40,41) angeordnet ist, welche eine Ansprechverzögerung derart aufweist, daß Kleineisstücke und zerkleinerte Eisstücke ohne Stillegung der angetriebenen Teile ausgeworfen werden.

5. Vorrichtung nach Anspruch 3, **dadurch gekennzeichnet,** daß die Lichtschranke eine Ansprechverzögerung unterhalb von 200 msec aufweist.

6. Vorrichtung nach Anspruch 4, **dadurch gekennzeichnet,** daß die Lichtschranke als Infrarotunterbrechungslichtschranke (34,35,36,37;38, 39,40,41) ausgebildet ist.

7. Vorrichtung nach Anspruch 4, **dadurch gekennzeichnet,** daß die Lichtschranke als Infrarotreflexlichtschranke (3,4,5;6,7,8) ausgebildet ist.

8. Vorrichtung nach Anspruch 4, **dadurch gekennzeichnet,** daß die Lichtschranke für Impulsbetrieb ausgebildet ist.

9. Vorrichtung nach Anspruch 7, **dadurch gekennzeichnet,** daß die Schaltung der Reflexlichtschranke ein Hochpaßfilter (9) mit einer Durchlaßfrequenz oberhalb der Netzfrequenz aufweist.

10. Vorrichtung nach Anspruch 7,**dadurch gekennzeichnet,** daß die Impulsfolgefrequenz des Infrarotsenders unterhalb von 2,5 kHz bei einem Tastverhältnis oberhalb von 1:4 liegt.

11. Vorrichtung nach Anspruch 6, **dadurch gekennzeichnet,** daß die Impulsfolgefrequenz des Infrarotsenders unterhalb von 30 kHz bei einem Tastverhältnis von 1:1 liegt.

12. Vorrichtung nach Anspruch 4, **dadurch gekennzeichnet,** daß mehrere Lichtschranken in Zeilenanordnung angebracht sind.

13. Vorrichtung nach Anspruch 7, **dadurch gekennzeichnet,** daß die Sendedioden (3,4,5) hintereinander geschaltet sind und daß die Empfangsdioden (6,7,8) Parallelschaltung aufweisen.

14. Vorrichtung nach Anspruch 6, **dadurch gekennzeichnet,** daß die Sendedioden (34,35,36, 37) nacheinanderfolgend angesteuert werden und daß die Empfangsdioden (38,39,40,41) in Reihe geschaltet sind.

15. Vorrichtung nach Anspruch 4, **dadurch gekennzeichnet,** daß die Auswurföffnung (20a) durch einen Schachtteil (20) gebildet ist, in dessen Wandteilen mindestens eine Lichtschranke angeordnet ist.

16. Vorrichtung nach Anspruch 15, **dadurch gekennzeichnet,** daß in dem Schachtteil (20) eine durch die fallenden Eisstücke bzw. das zerkleinerte Eis auslenkbare Schwenkklappe (28) angeordnet ist, welche die Eingriffsöffnung zu den bewegbaren Teilen der Ausgabe- und Zerkleinerungsvorrichtung wenigstens teilweise abdeckt.

17. Vorrichtung nach Anspruch 16, **dadurch gekennzeichnet,** daß die Schwenkklappe (28) aus ihrer Ausgangsstellung in Schräglage durch ein auf ihrer Schwenkwelle (29) angeordnetes Schwerkraftorientierungsgewicht (30) lageorientiert auslenkbar ist.

18. Vorrichtung nach Anspruch 17, **dadurch gekennzeichnet,** daß die Schwenkklappe (28) im Abwurfbereich der zerkleinerten Eisstücke ausgespart ist.

19. Vorrichtung nach Anspruch 15, **dadurch gekennzeichnet,** daß im Schachtteil (20) mehrere Lichtschranken in Parallelanordnung der Lichtstrecken angeordnet sind.

20. Vorrichtung nach Anspruch 4, **dadurch gekennzeichnet,** daß die Infrarotsende- und Empfangsdioden auf der Außenseite eines Schachtteils (20) aus infrarotdurchlässigem Material angeordnet sind.

Fig.1

EP 0 505 830 A2

Fig. 2

Fig. 3

Fig. 4

Fig. 5

EP 0 505 830 A2